# EUROPÄISCHE PATENTSCHRIFT

(11) **EP 1 456 546 B1**
(45) Veröffentlichungstag und Bekanntmachung des Hinweises auf die Patenterteilung: **26.04.2006**
(21) Anmeldenummer: 02794976.7
(22) Anmeldetag: 06.12.2002
(51) Int. Cl.: F16C 33/10, F16C 17/04

(54) **DYNAMISCHE GASLAGERUNG EINER WELLE MIT POLYGONSPIEGEL MIT UNTERDRUCKPOLYGONKAMMER**
DYNAMIC GAS BEARING OF A SHAFT COMPRISING POLYGONAL MIRRORS AND A LOW-PRESSURE POLYGONAL ROOM
SYSTEME DE MONTAGE DYNAMIQUE PAR PALIERS A GAZ D'UN ARBRE COMPRENANT DES MIROIRS POLYGONAUX ET UNE CHAMBRE POLYGONALE A VIDE PARTIEL

(30) Priorität: 19.12.2001 DE 10162675
(43) Veröffentlichungstag der Anmeldung: 15.09.2004
(73) Patentinhaber: Wanger, Gerhard, 91722 Arberg (DE)
(72) Erfinder: Wanger, Gerhard, 91722 Arberg (DE)
(74) Vertreter: Lösch, Christoph Ludwig Klaus
(86) Internationale Anmeldenummer: PCT/DE2002/004484
(87) Internationale Veröffentlichungsnummer: WO 2003/052285

(56) Entgegenhaltungen:
- DE-A- 19 725 784
- DE-C1- 19 821 601
- US-A- 5 947 606

## Beschreibung

Die Erfindung betrifft eine dynamische Gaslagerung einer Motorspindel mit einer rotierenden Welle mit den Merkmalen des Oberbegriffs des Patentanspruchs 1. Ferner betrifft die Erfindung ein Verfahren zum Betreiben einer dynamischen Gaslagerung einer Motorspindel mit den Merkmalen des Oberbegriffs des Patentanspruchs 14.

Als Stand der Technik ist aus der deutschen Patentanmeldung Az. 100 55 787.2 (Anmelder: Gerhard Wanger) eine dynamische Gaslagerung bekannt, an deren rotierender Welle ein Polygon in einer Polygonkammer angebracht ist. Bei Verwendung einer derartigen dynamischen Gaslagerung zur Laserprojektion wird die rotierende Welle mit sehr hohen Drehzahlen (z.B. über 100.000 U/min) betrieben, wodurch in der Polygonkammer im Bereich des Polygonspiegels Luftverwirbelungen auftreten können, welche zum einen den Lichtbrechungsindex in der Polygonkammer verändern und zum anderen die Lagerungsgenauigkeit der rotierenden Welle beeinträchtigen.

Der Erfindung liegt die Aufgabe zugrunde, eine dynamische Gaslagerung einer Motorspindel sowie ein Verfahren zum Betreiben einer derartigen dynamischen Gaslagerung anzubieten, bei denen eine Entstehung von Luftwirbeln in der Polygonkammer verringert wird.

Die Aufgabe wird für die dynamische Gaslagerung durch die Merkmale des kennzeichnenden Teils des Patentanspruchs 1 in Verbindung mit den Merkmalen des Oberbegriffs gelöst. Vorteilhafte Ausführungsformen der dynamischen Gaslagerung werden in den Unteransprüchen 2 - 13 beschrieben. Für das Verfahren wird die Aufgabe durch die Merkmale des kennzeichnenden Teils des Patentanspruchs 14 in Verbindung mit den Merkmalen des Oberbegriffs gelöst. Eine vorteilhafte Verfahrensvariante ist in Patentanspruch 15 beschrieben.

Für die dynamische Gaslagerung wird die Aufgabe dadurch gelöst, daß das Verhältnis des Lagerspalts des hinteren Axiallagers mit dem Lagerspalt des vorderen Axiallagers mindestens den Wert 2 erreicht. Damit ist der Lagerspalt des hinteren Axiallagers mindestens doppelt so groß wie der Lagerspalt des vorderen Axiallagers, wodurch das hintere Axiallager im wesentlichen als Pumpe und das vordere Axiallager im wesentlichen als Traglager dient. Durch die Pumpwirkung des hinteren Axiallagers wird in der Polygonkammer ein Unterdruck erzeugt und Luft aus der Polygonkammer abgeführt. Hierdurch werden störende Luftwirbel in der Polygonkammer unterbunden. Somit kann eine höhere Laufgenauigkeit des Polygonspiegels erreicht werden, da der Taumelfehler der Polygonwelle wesentlich kleiner ist. Außerdem werden bei Betrieb im Unterdruck die Druckschwankungen der Luft um den Polygonspiegel verringert und der Lichtbrechungsindex ist keinen unregelmäßigen Veränderungen unterzogen, so daß eine präzise Ablenkung des Laserstrahls gewährleistet ist. Zusätzlich wird bei Betrieb im Unterdruck die Luftreibung des Polygonspiegels verringert, was sich vor allem bei hohen Drehzahlen der Polygonwelle durch geringere Leistungsverluste positiv auswirkt.

Zur Verbesserung seiner Tragwirkung ist das vordere Axiallager im inneren Durchmesserbereich geschlossen. Zur Abführung von abzupumpender Luft kann das hintere Axiallager eine Verbindung zum radialen Gaslager besitzen, um abgepumpte Luft in Richtung des radialen Gaslagers abzuführen.

Vorteilhafterweise übersteigt das Verhältnis der axialen Tragkraft des vorderen Axiallagers zur Tragkraft des hinteren Axiallagers den Wert 3, so daß das vordere Axiallager als in erster Linie "tragendes Lager" und das hintere Axiallager in erster Linie aufgrund des erweiterten Luftspalts und der geringeren Tragkraft als "pumpendes Lager" verwendet wird.

Die Unterdruckerzeugung der beiden Axiallager wird weiter erhöht, wenn die axiale Steifigkeit des hinteren Axiallagers höchstens 30 % der axialen Steifigkeit des vorderen Axiallagers beträgt.

Insgesamt kann nach einer vorteilhaften Ausführungsform das gesamte axiale Lagerspiel, also die Summe aus den beiden Lagerspalten des vorderen und hinteren Axiallagers zwischen 4 - 18 µm betragen.

Nach einer weiteren vorteilhaften Ausführungsform ist das vordere Axiallager über eine Druckausgleichsbohrung mit einer Überdruckkammer verbunden. Damit wird es ermöglicht, die schnelldrehende Welle des Polygons innerhalb kürzester Zeit bis zum Stillstand abzubremsen und dabei den in der Polygonkammer aufgebauten Unterdruck über die Druckausgleichsbohrung in Verbindung mit der Überdruckkammer abzubauen.

Bei einer weiteren vorteilhaften Ausführungsform sind das vordere und hintere Axiallager als Spiralrillenlager ausgebildet und besitzen vorteilhafterweise unterschiedliche Spiralrillengeometrien, um - wie angestrebt - das vordere Axiallager als in erster Linie "tragendes Lager" und das hintere Axiallager als in erster Linie "pumpendes Lager" auszubilden.

Beim erfindungsgemäßen Verfahren zur Vermeidung von Luftwirbeln wird zum Betreiben einer dynamischen Gaslagerung in der Polygonkammer der rotierenden Welle durch ein vorderes und hinteres Axiallager ein Unterdruck erzeugt. Erfindungsgemäß kann somit durch entsprechende Ausgestaltung des vorderen und hinteren Axiallagers der gewünschte Unterdruck aufgebaut werden, ohne daß eine gesonderte Evakuierungseinrichtung notwendig ist.

Die Erfindung ist anhand von Ausführungsbeispielen in den Zeichnungsfiguren näher erläutert. Es zeigen:
- Fig. 1: ein Längsschnitt durch ein im wesentlichen zylindrisch ausgebildetes Gehäuse der dynamischen Gaslagerung sowie
- Fig. 2: ein Schnitt A-A nach Fig. 1.

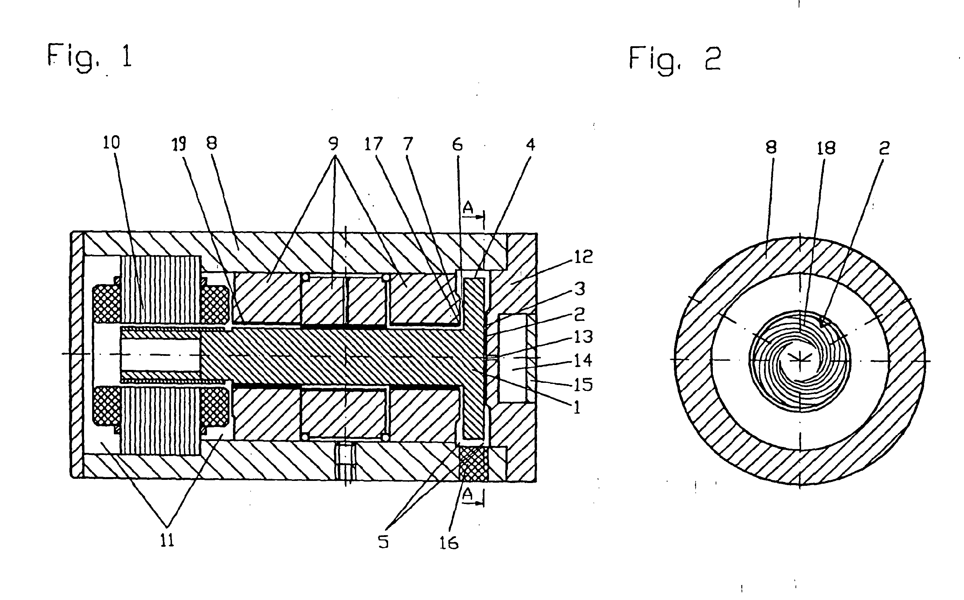

Fig. 1 zeigt eine dynamische Gaslagerung mit einer durch einen Antrieb 10 in einer Antriebskammer 11 angetriebenen Welle 1 mit einem Polygonspiegel 4 im vorderen Bereich der Welle 1. Die Welle 1 ist über radiale Gaslager 9 (an sich bekannt aus der deutschen Patentanmeldung Az. 100 55 787.2, Anmelder: Gerhard Wanger) sowie ein vorderes Axiallager 2 und ein hinteres Axiallager 7 im Gehäuse 8 der dynamischen Gaslagerung aufgenommen. Die Polygonkammer 5 besitzt ein Fenster 16 zur Laserprojektion von am rotierenden Polygonspiegel 4 reflektierten Laserstrahlen. Bei der dynamischen Gaslagerung gemäß Fig. 1 besitzt das vordere Axiallager 2 in erster Linie eine Tragfunktion und dient zur axialen Stabilisierung der Welle 1. Das hintere Axiallager 7 dient in erster Linie als Pumpe, um in der abgeschlossenen Polygonkammer 5 einen Unterdruck zu erzeugen und dortige Luft z.B. über eine Verbindung 17 und eine Öffnung 19 in Richtung zur Antriebskammer 11 abzupumpen. Die Antriebskammer 11 ist insbesondere (weitgehend) gasdicht ausgeführt und nur über die Öffnung 19 mit einem Lagerspalt des radialen Gaslagers 9 und der Polygonkammer 5 verbunden. Das Volumen der Polygonkammer 5 soll vorteilhafterweise das Volumen der Antriebskammer 11 um maximal 40 Prozent übersteigen um einen ausreichenden Unterdruck in der Polygonkammer 5 zu erreichen.

Die vom hinteren Axiallager 7 aus der Polygonkammer 5 abgepumpte Luft wird den Lagerspalten der radialen Gaslager über eine Verbindung 17 zugeführt.

Das vordere Axiallager 2 und das hintere Axiallager 7 sind insbesondere als Spiralrillenlager ausgeführt, wobei die Spiralrillengeometrie des vorderen Axiallagers 2 zur Aufnahme von Belastungen und zur Erzielung einer erhöhten Tragkraft ausgebildet ist. Frontseitig ist die Polygonkammer 5 durch den Deckel 12 abgedichtet. Das vordere Axiallager 2 ist über eine Druckausgleichsbohrung 13 im Deckel 12 mit einer Überdruckkammer 14 verbunden. Letztere kann durch eine Scheibe 15 abgedeckt sein. Über die Druckausgleichsbohrung 13 wird bei einem plötzlichen Abbremsen der Welle 1 von hohen Drehzahlen (z.B. von über 100.000 U/min bis zum Stillstand) der während der Rotation der Welle 1 in der Polygonkammer 5 durch die Pumpwirkung des hinteren Axiallagers 7 aufgebaute Unterdruck abgebaut. Damit wird ein rasches Herunterfahren und Abbremsen der Welle 1 ermöglicht. Das axiale Lagerspiel der Polygonwelle 1 wurde durch präzises Maßabstimmen am Deckel 12 oder am Gehäuse 8 eingestellt. -

Fig. 2 zeigt in der Schnittdarstellung das Gehäuse 8 sowie das vordere Axiallager 2 mit einem Spiralrillenprofil 18.

### BEZUGSZEICHEN

- 1: Welle
- 2: vorderes Axiallager
- 3: vorderer axialer Lagerspalt
- 4: Polygonspiegel
- 5: Polygonkammer
- 6: hinterer axialer Lagerspalt
- 7: hinteres Axiallager
- 8: Gehäuse
- 9: radiales Gaslager
- 10: Antrieb
- 11: Antriebskammer
- 12: Deckel
- 13: Druckausgleichsbohrung
- 14: Überdruckkammer
- 15: Scheibe
- 16: Fenster
- 17: Verbindung
- 18: Spiralrillenprofil
- 19: Öffnung

## Patentansprüche

1. Dynamische Gaslagerung einer Motorspindel mit einer rotierenden Welle (1), die in einem Gehäuse (8) in radialer und axialer Richtung gasgelagert ist, wobei die Welle einen Polygonspiegel (4) in einer Polygonkammer (5) aufweist und zur radialen Lagerung entlang der Welle mindestens ein radiales Gaslager (9) sowie zur axialen Lagerung ein vorderes (2) und ein hinteres (7) sowie vorhanden sind,
**dadurch gekennzeichnet, daß** das Verhältnis des Lagerspalts (6) des hinteren Axiallagers (7) mit dem Lagerspalt (3) des vorderen -Axiallagers (2) mindestens den Wert 2 erreicht.

2. Dynamische Gaslagerung nach Anspruch 1,
**dadurch gekennzeichnet, daß** das vordere Axiallager (2) in einem inneren Durchmesserbereich geschlossen ist.

3. Dynamische Gaslagerung nach Anspruch 1 oder 2,
**dadurch gekennzeichnet, daß** das hintere Axiallager (7) eine Verbindung (17) zum radialen Gaslager (9) aufweist.

4. Dynamische Gaslagerung nach einem der vorhergehenden Ansprüche,
**dadurch gekennzeichnet, daß** der Lagerspalt (3) des vorderen Axiallager (2) höchstens 33 % des gesamten axialen Lagerspiels der Polygonwelle (1) beansprucht.

5. Dynamische Gaslagerung nach einem der vorhergehenden Ansprüche,
**dadurch gekennzeichnet, daß** das Verhältnis der axialen Tragkraft des vorderen Axiallagers (2) zur Tragkraft des hinteren Axiallagers (7) den Wert 3 übersteigt.

6. Dynamische Gaslagerung nach einem der vorhergehenden Ansprüche,
**dadurch gekennzeichnet, daß** die axiale Steifigkeit des hinteren Axiallagers (7) höchstens 30 % der axialen Steifigkeit des vorderen Axiallagers (2) beträgt.

7. Dynamische Gaslagerung nach einem der vorhergehenden Ansprüche,
**dadurch gekennzeichnet, daß** das gesamte axiale Lagerspiel der Welle (1) zwischen 4 - 18 µm beträgt.

8. Dynamische Gaslagerung nach einem der vorhergehenden Ansprüche,
**dadurch gekennzeichnet, daß** das vordere Axiallager (2) über eine Druckausgleichsbohrung (13) mit einer Überdruckkammer (14) verbunden ist.

9. Dynamische Gaslagerung nach einem der vorhergehenden Ansprüche,
**dadurch gekennzeichnet, daß** das vordere Axiallager (2) und das hintere Axiallager (7) als Spiralrillenlager ausgebildet sind.

10. Dynamische Gaslagerung nach Anspruch 9,
**dadurch gekennzeichnet, daß** das vordere und das hintere Axiallager (2, 7) unterschiedliche Spiralrillengeometrien besitzen.

11. Dynamische Gaslagerung nach einem der vorhergehenden Ansprüche,
**dadurch gekennzeichnet, daß** eine Antriebskammer (11) zur Aufnahme des Antriebs (10) der Gaslagerung vorgesehen ist.

12. Dynamische Gaslagerung nach Anspruch 11,
**dadurch gekennzeichnet, daß** die Antriebskammer (11) bis auf eine Öffnung (19) zum Lagerspalt des radialen Gaslagers (9) gasdicht ausgeführt ist.

13. Dynamische Gaslagerung nach Anspruch 11 oder 12,
**dadurch gekennzeichnet, daß** das Volumen der Polygonkammer (5) maximal 40 Prozent größer ist als das Volumen der Antriebskammer (11).

14. Verfahren zum Betreiben einer dynamischen Gaslagerung einer Motorspindel mit einer rotierenden Welle (1) mit einem Polygonspiegel (4) in einer Polygonkammer (5) nach einem der Ansprüche 1 - 13,
**dadurch gekennzeichnet, daß** in der Polygonkammer (5) zur Verringerung von Luftwirbeln durch ein vorderes Axiallager (2) und ein hinteres Axiallager (7) ein Unterdruck erzeugt wird.

15. Verfahren nach Anspruch 14,
**dadurch gekennzeichnet, daß** das vordere Axiallager (2) im wesentlichen eine Tragfunktion zur Aufnahme von axialen Lagerkräften und das hintere Axiallager (7) im wesentlichen eine Pumpfunktion zum Abpumpen von Luft aus der Polygonkammer besitzt.

## Claims

1. A dynamic gas bearing of a motor spindle having a rotating shaft (1) that is supported on gas bearings in the radial and axial directions in a housing (8), the shaft having a polygonal mirror (4) in a polygonal chamber (5), and there being provided at least one radial gas bearing (9) for the radial support along the shaft and a front (2) and a rear gas (7) bearing for axial support, **characterized in that** the ratio of the bearing gap (6) of the rear axial bearing (7) to the bearing gap (3) of the front axial bearing (2) reaches at least the value 2.

2. The dynamic gas bearing as claimed in claim 1, **characterized in that** the front axial bearing (2) is closed in an inner diameter region.

3. The dynamic gas bearing as claimed in claim 1 or 2, **characterized in that** the rear axial bearing (7) has a connection (17) to the radial gas bearing (9).

4. The dynamic gas bearing as claimed in one of the preceding claims, **characterized in that** the bearing gap (3) of the front axial bearing (2) occupies at most 33% of the total axial bearing play of the polygonal shaft (1).

5. The dynamic gas bearing as claimed in one of the preceding claims, **characterized in that** the ratio of the axial supporting force of the front axial bearing (2) to the supporting force of the rear axial bearing (7) exceeds the value 3.

6. The dynamic gas bearing as claimed in one of the preceding claims, **characterized in that** the axial stiffness of the rear axial bearing (7) is at most 30% of the axial stiffness of the front axial bearing (2).

7. The dynamic gas bearing as claimed in one of the preceding claims, **characterized in that** the total axial bearing play of the shaft (1) is between 4-18 µm.

8. The dynamic gas bearing as claimed in one of the preceding claims, **characterized in that** the front axial bearing (2) is connected to an excess-pressure chamber (14) via a pressure-equalizing bore (13).

9. The dynamic gas bearing as claimed in one of the preceding claims, **characterized in that** the front axial bearing (2) and the rear axial bearing (7) are designed as a spiral flute bearing.

10. The dynamic gas bearing as claimed in claim 9, **characterized in that** the front and the rear axial bearings (2, 7) have different spiral flute geometries.

11. The dynamic gas bearing as claimed in one of the preceding claims, **characterized in that** a drive chamber (11) is provided for holding the drive (10) of the gas bearing.

12. The dynamic gas bearing as claimed in claim 11, **characterized in that** the drive chamber (11) is embodied in a gastight fashion up to an opening (19) to the bearing gap of the radial gas bearing (9).

13. The dynamic gas bearing as claimed in claim 11 or 12, **characterized in that** the volume of the polygonal chamber (5) is at most 40 percent larger than the volume of the drive chamber (11).

14. A method for operating a dynamic gas bearing of a motor spindle having a rotating shaft (1) having a polygonal mirror (4) in a polygonal chamber (5), as claimed in one of claims 1-13, **characterized in that** low pressure is produced by a front axial bearing (2) and a rear axial bearing (7) in order to reduce air vortices.

15. The method as claimed in claim 14, **characterized in that** the front axial bearing (2) essentially has a support function for absorbing axial bearing forces, and the rear axial bearing (7) essentially has a pumping function for pumping air out of the polygonal chamber.

## Revendications

1. Système de montage dynamique par paliers à gaz d'une broche de moteur avec un arbre rotatif (1) qui est monté sur paliers à gaz dans un boîtier (8) dans la direction radiale et axiale, l'arbre présentant un miroir polygonal (4) dans une chambre polygonale (5) et pour un montage radial le long de l'arbre, au moins un palier à gaz radial (9) ainsi que pour le montage axial, un palier à gaz avant (2) et un palier à gaz arrière (7), **caractérisé en ce que** le rapport de l'écartement (6) de palier du palier axial arrière (7) à l'écartement (3) de palier du palier axial avant (2) atteint au moins la valeur 2.

2. Système de montage dynamique par paliers à gaz selon la revendication 1, **caractérisé en ce que** le palier axial avant (2) est fermé dans une zone diamétrale intérieure.

3. Système de montage dynamique par paliers à gaz selon la revendication 1 ou 2, **caractérisé en ce que** le palier axial arrière (7) présente un raccord (17) au palier à gaz radial (9).

4. Système de montage dynamique par paliers à gaz selon l'une quelconque des revendications précédentes, **caractérisé en ce que** l'écartement de palier (3) du palier axial avant (2) occupe au maximum 33% du jeu de palier axial total de l'arbre polygonal (1).

5. Système de montage dynamique par paliers à gaz selon l'une quelconque des revendications précédentes, **caractérisé en ce que** le rapport de la force portante axiale du palier axial avant (2) à la force portante du palier axial arrière (7) dépasse la valeur 3.

6. Système de montage dynamique par paliers à gaz selon l'une quelconque des revendications précédentes, **caractérisé en ce que** la rigidité axiale du palier axial arrière (7) s'élève au maximum à 30% de la rigidité axiale du palier axial avant (2).

7. Système de montage dynamique par paliers à gaz selon l'une quelconque des revendications précédentes, **caractérisé en ce que** le jeu de palier axial total de l'arbre (1) est compris entre 4 et 18 µm.

8. Système de montage dynamique par paliers à gaz selon l'une quelconque des revendications précédentes, **caractérisé en ce que** le palier axial avant (2) est raccordé à une chambre à surpression (14) par un alésage de compensation de pression (13).

9. Système de montage dynamique par paliers à gaz selon l'une quelconque des revendications précédentes, **caractérisé en ce que** le palier axial avant (2) et le palier axial arrière (7) sont formés en tant que paliers à rainure hélicoïdale.

10. Système de montage dynamique par paliers à gaz selon la revendication 9, **caractérisé en ce que** les paliers axiaux avant et arrière (2,7) possèdent différentes géométries de rainure hélicoïdale.

11. Système de montage dynamique par paliers à gaz selon l'une quelconque des revendications précédentes, **caractérisé en ce qu'**une chambre d'actionnement (11) est prévue pour recevoir l'actionneur (10) du système de montage par paliers à gaz.

12. Système de montage dynamique par paliers à gaz selon la revendication 11, **caractérisé en ce que** la chambre d'actionnement (11) est réalisée de façon étanche aux gaz à l'exception d'une ouverture (19) en direction de l'écartement de palier du palier à gaz radial (9).

13. Système de montage dynamique par paliers à gaz selon la revendication 11 ou 12, **caractérisé en ce que** le volume de la chambre polygonale (5) est au maximum 40% supérieur au volume de la chambre d'actionnement (11).

14. Procédé pour exploiter un système de montage dynamique par paliers à gaz d'une broche de moteur avec un arbre tournant (1) avec un miroir polygonal (4) dans une chambre polygonale (5) selon l'une quelconque des revendications 1 à 13, **caractérisé en ce qu'**une dépression est produite dans la chambre polygonale (5) pour réduire les tourbillons d'air, par un palier axial avant (2) et un palier axial arrière (7).

15. Procédé selon la revendication 14, **caractérisé en ce que** le palier axial avant (2) possède essentiellement une fonction porteuse pour recevoir les forces de palier axiales et le palier axial arrière (7) possède essentiellement une fonction de pompe pour pomper l'air hors de la chambre polygonale.
